# EUROPEAN PATENT APPLICATION

(11) **EP 2 192 799 A1**
(43) Date of publication of application: **02.06.2010**
(21) Application number: 08832506.3
(22) Date of filing: 19.09.2008
(51) Int. Cl.: H04W 4/00

(54) **NETWORK NODE AND MOBILE TERMINAL**

(30) Priority: 19.09.2007 JP 2007242307; 23.07.2008 JP 2008189691
(71) Applicant: Panasonic Corporation, Kadoma-shi Osaka 571-8501 (JP)
(72) Inventor: HIRANO, Jun c/o Panasonic Corp., IPROC, Chuo-ku, Osaka 540-6207 (JP); NG, Chan Wah c/o Panasonic Singapore Labs.Pte.Ltd., Tai Seng Ind.Estate, Singapore 534415 (SG); KOH, Tien Ming Benjamin c/o Panasonic Singapore Labs.Pte.Ltd., Tai Seng Ind.Estate, Singapore 534415 (SG); LIM, Chun Keong Benjamin c/o Panasonic Singapore Labs.Pte.Ltd., Tai Seng Ind.Estate, Singapore 534415 (SG); TAN, Pek Yew c/o Panasonic Singapore Labs.Pte.Ltd., Tai Seng Ind.Estate, Singapore 534415 (SG)
(74) Representative: Grünecker, Kinkeldey, Stockmair & Schwanhäusser Anwaltssozietät
(86) International application number: PCT/JP2008/002584
(87) International publication number: WO 2009/037846

(57) **Abstract**

Disclosed is a technique of, in a network conducting network based local mobility management, suppressing generation of signaling and an increase of processing load on a network entity and preventing a delay. According to this technique, a mobile node (MN 130) receives specific information (a token) including an interface identifier and a binding identifier, for example, from a network side (MAG 120) when connecting therewith first. When the mobile node conducts a handover, the mobile node notifies a next connecting MAG 122 of the token. The MAG receiving the token can judge based on this token whether the connection by the mobile node is due to a handover changing a connection point for a certain interface or due to a new connection using a different interface without making an inquiry to other network nodes.

## Description

### TECHNICAL FIELD

The present invention relates to a network node and a mobile terminal in association with a network technique using an Internet Protocol (IP), and particularly relates to a network node and a mobile terminal in a system where the mobile terminal (hereinafter this may be called a mobile node) conducts communications in a network based local mobility management domain while changing a connection point.

### BACKGROUND ART

Currently, a large number of devices conduct communications mutually using an IP network. In order to provide mobile equipment with mobility support, IETF (Internet Engineering Task Force) is developing techniques enabling mobility support expansion and network mobility support in IPv6 (see the following Non-Patent Documents 1 and 2). In a mobile IP, each mobile node has a perpetual home domain. When a mobile node connects with its own home network, a primary global address is allocated to the mobile node as a home address (HoA). On the other hand, when the mobile node is away from the home network, that is, connects with another foreign network, a temporary global address is usually allocated to the mobile node as a care-of address (CoA). The concept of the mobility support realizes the reachability to a mobile node using its own home address even when the mobile node connects with another foreign network.

Such a concept has been put into practice in Non-Patent Document 1 by introducing an entity known as a home agent (HA) to a home network. A mobile node uses a binding update (BU) message to register a care-of address to the home agent. Thereby, the home agent becomes able to generate binding between the home address and the care-of address of the mobile node. The home agent has a function of receiving (intercepting) a message addressed to the home address of the mobile node and using encapsulation of a packet (this means that a certain packet is made a payload of a new packet, which is known as a packet tunneling also) to transfer the packet to the care-of address of the mobile node.

Although the above-stated technique solves the problem of mobility, another problem may occur due to a system configuration. For instance, a mobile node has to transmit a BU message to a home agent. When the mobile node moves at high speeds, a large number of BU messages will be generated. Further, there is a possibility of a distance from the mobile node to the home agent increasing. As a result, it takes much time for the BU message to reach the home agent, thus causing a possibility of the mobile node moving to another location before the home agent starts transferring of a packet to a care-of address (updated care-of address) of the mobile node. Since such problems may occur, Non-Patent Document 2 and the following Patent Document 1, for example, propose a technique of using network based local mobility management. Thereby, a mobile node is capable of using the same address after a change of a connection point in a local network domain, and so there is no need to transmit a BU message frequently to a home agent of the mobile node.

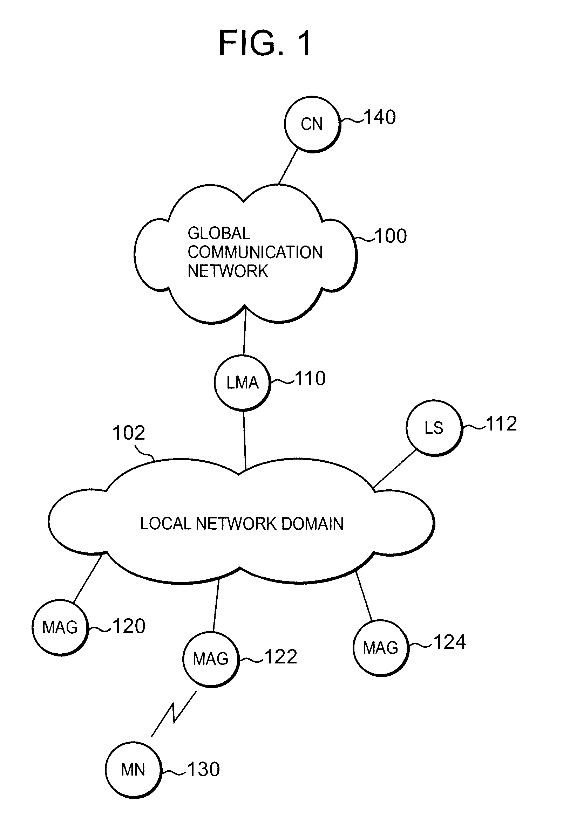

Referring now to Fig. 1, the following describes a system conducting conventional network based local mobility management. In Fig. 1, a MN 103 moves while connecting with a local network domain 102 to access a global communication network 100 such as the Internet, which can conduct communications with a correspondent node (CN) 140 connecting with the global communication network 100, for example.

The local network domain 102 has a local mobility anchor (LMA) 110, a plurality of mobility access gateways (MAGs) 120, 122, 124, and a local server (LS) functioning as an AAA server, and is capable of providing a network based local mobility management service.

The MAGs 120, 122, 124 function as access routers with which the MN 130 connects. Every time the MN 130 connects with the MAG 120, 122, or 124, the MAG 120, 122, or 124 firstly uses the LS 112 to verify a credential to confirm whether the MN 130 is authorized to use a service in the local network domain 102. Further, the LS 112 notifies the MAGs 120, 122, 124 of a prefix of an address to be allocated to the MN 130. Thereby, the MAGs 120, 122, 124 can notify the MN 130 of the same prefix. Note that in this specification this prefix (the prefix notified from the local network domain 102 conducting network based local mobility management to the MN 130) is called a home network prefix.

At the same time, the MAGs 120, 122, 124 have to update the LMA 110 so that the prefix allocated to the MN 130 or a packet transmitted to the address can be tunneled to an appropriate MAG (the MAG with which the MN 130 currently connects). This updating is conducted by the MAGs 120, 122, 124 to transmit a PBU message (Proxy Binding Message) to the LMA 110, thus letting the LMA 110 associate the address used by the MN 130 with the MAGs 120, 122, 124.

This technique is called proxy mobile IP (PMIP). In this case, the MAGs 120, 122, 124 transmit a BU message instead of the MN 130, and the LMA 110 functions as a home agent of the MN 130 in the local network domain 102. In this way, regardless of with which MAGs 120, 122, 124 the MN 130 is currently connecting, the MN 130 can always use the same home network prefix and doesn't need to change the address. Thus, the MN 130 doesn't need to transmit a BU message frequently to the home agent.

Actually in the case where there is no need to keep address reachability when the MN 130 moves to a different network domain or where the MN 130 moves only within the same local network domain 102, the MN 130 doesn't need to have a global home agent and transmit a BU message.

In a mobile node with multiple interfaces, however, such a simple network based local mobility management method may fail to operate effectively.

Let that the MN 130 illustrated in Fig. 1 has two interfaces, and is capable of connecting with two MAGs (MAGs 120, 122) at the same time. In this case, according to the conventional PMIP, each of the MAGs 120, 122 transmits a PBU message to the LMA 110. On the other hand, the LMA 110 cannot distinguish between the situation where the MN 130 changes a connection point from the MAG 120 to the MAG 122 and the situation where the MN 130 connects with the MAGs 120 and 122 at the same time. Thus, the following problem occurs: receiving a certain PBU message in association with the MN 130, the LMA 110 cannot distinguish clearly whether updating by this PBU message results from a change of a connection point of a certain interface or results from a simultaneous connection conducted by another interface while keeping a connection of a certain interface.

One possible method to solve the above-stated problem is to use a BID (Binding Identifier) allocated to each binding.

For instance, when the MN 130 connects with the MAG 120, a PBU message transmitted from the MAG 120 to the LMA 110 includes a description of a specific BID value (e.g., "1"). When the MN 130 changes a connection point from the MAG 120 to the MAG 122, a PBU message transmitted from the MAG 122 to the LMA 110 includes a description of the same BID value "1" as the BID value included in the above-stated PBU message transmitted from the MAG 120 to the LMA 110. As a result, as the connection point is changed, the binding associated with the MAG 120 is updated in association with the MAG 122.

On the other hand, in the case where the MN 130 connects with the MAG 122 using another interface while keeping the connection with the MAG 120, a PBU message transmitted from the MAG 122 to the LMA 110 includes a description of a BID value (e.g., "2") different from the above-stated BID value included in the PBU message transmitted from the MAG 120 to the LMA 110. As a result, it can keep the binding associated with the MAG 120 as well as the binding in association with the MAG 122.

As another possible method to solve the above-stated problem, each of the MAGs 120, 122, and 124 may detect disconnection of the MN 130. Detecting the disconnection with the MN 130, the MAG 120, 122, 124 transmits a registration cancelation PBU message, whereby its own binding can be removed from the LMA 110. As a result, when binding is updated due to a change of a connection point, the binding before the change of the connection point can be securely deleted.

As still another possible method to solve the above-stated problem, an access router is allowed to store context of a mobile node with respect to a network entity, thus letting the MAG 120, 122, 124 context-transfer concerning the MN 130, for example, as disclosed in the following Patent Document 2 and Patent Document 3. That is, in the case of this technique applied, when the MN 130 connects with the local network domain 102, context of the MN 130 is kept in a predetermined network entity (context storage node), and an access router (herein MAG) with which the MN 130 connects later simply can search the context of the MN 130 in the context storage node. If such context contains information required to derive an appropriate BID value and a sequence number, the MAG 120, 122, 124 can distinguish whether the MN 130 changes a connection point or a simultaneous connection is conducted by another interface. The following Patent Document 5 also discloses a method to execute context transfer via a mobility anchor point.
Patent Document 1: International Application Publication No. WO03/107600
Patent Document 2: International Application Publication No. WO06/032003
Patent Document 3: International Application Publication No. WO06/017686
Patent Document 4: International Application Publication No. WO05/032193
Patent Document 5: US Patent Application Publication No. 2007/0254661 A1
Patent Document 6: International Application Publication No. WO07/114623
Patent Document 7: US Patent No. 7046647
Non-Patent Document 1: Johnson, D. B., Perkins, C. E., and Arkko, J., "Mobility Support in IPv6", Internet Engineering Task Force Request For Comments 3775, June 2004.
Non-Patent Document 2: Gundavelli, S., "Proxy Mobile IPv6", Internet Engineering Task Force Draft: draft-ietf-netlmm-proxymip6-00.txt, April 2007.

In the above-stated method using BID, however, the MAG 120, 122, 124 has to make an inquiry to the LS 112 to acquire a correct BID value to be used. Further, the LS 112 receiving this inquiry has to conduct a text as to whether a connection of each MN 130 is effective or not (some signaling also occurs concerning this test) to confirm effectiveness of BID, and then judge whether a connection point is changed concerning a certain interface (i.e., a handover by a certain interface) or simultaneous connection is conducted by another interface, and decide an appropriate BID value depending on the judgment result. Such processing leads to the possibility of a lot of signaling occurring in the local network domain 102 or an increase in processing load to be processed by the LS 112. Then, such an inquiry made to the LS 112 leads to the possibility of a delay occurring when a PBU message is transmitted to the LMA 110.

In the above-stated method of detecting a disconnection with a MN by a MAG, a delay in routing may lead to a registration cancellation PBU message (message transmitted from a MAG connected before) reaching the LMA 110 later than the next PBU message (message transmitted from a MAG connected newly). For instance, when the MN 130 switches a connection from the MAG 120 to the MAG 122, a registration cancelation PBU message transmitted from the MAG 120 may reach the LMA 110 later than a PBU message transmitted from the MAG 122. In this case, the registration cancellation message reaching the LMA 110 late deletes all bindings of the MN 130, thus causing the possibility of a failure in connection of the MN 130 with the global communication network 100.

Herein, a sequence number used in a PBU message may solve the problem of deleting all bindings of the MN 130 by the registration cancelation PBU message. In this case, however, the LS 112 has to understand sequence numbers used in the respective MAGs 120, 122, 124, and in the case where the MN 130 connects simultaneously with the plurality of MAGs 120, 122, 124, all sequence numbers used in the MAGs 120, 122, 124 has to be managed securely in synchronization with each other. Such processing leads to a further increase in processing load on the LS 112, thus increasing the number of signaling generated.

Further, in the above-stated method of using context transfer also, a problem occurs such as a lot of signaling for inquiries to the context storage node or an increase in processing load on the context storage node similarly to the above-stated method of using BID. Further, in this case also, time is spent on communications with the context storage node, thus leading to a possibility of a delay occurring during a time from connection of the MN 130 with the MAG 120, 122, 124 to transmission of a PBU message to the LMA 110.

As another problem causing a delay of a mobile node with an interface, necessity to perform authentication can be considered. To solve this problem, the above-stated Patent Document 6 and Patent Document 7 as the conventional techniques disclose a pre-authentication method. In this pre-authentication method, a handover is followed by processing to configure an access key that a mobile node uses. In this technique, however, detailed information is transmitted to the next MAG, and therefore the above-stated problem still remains.

### DISCLOSURE OF THE INVENTION

In view of the above-stated problems, it is an object of the present invention to enable, in a network conducting network based local mobility management, clear distinction between the case of a mobile node (mobile terminal) with multiple interfaces changing a connection point for a certain interface and the case of a simultaneous connection being conducted using another interface while suppressing generation of signaling and an increase in processing load on network entity and preventing a delay.

In order to fulfill the above-stated object, a network node of the present invention functions, in a network system having a location management node that manages a location of a mobile terminal and provides a network based local mobility management service with the mobile terminal, as a gateway with which the mobile terminal having a plurality of wireless communication interfaces is connectable. The network node includes: communication means that provides a connection service that allows the mobile terminal to connect with the network system; information reception means that receives specific information from the mobile terminal when a connection is made by the mobile terminal; connection judgment means that judges, based on the specific information, whether the connection made by the mobile terminal is generated due to a handover with a connection point being changed at any interface or due to a new connection using another interface; and connection judgment result notification means that notifies a judgment result by the connection judgment means when update information is transmitted to the location management node to update a location of the mobile terminal.
With this configuration, in a network conducting network based local mobility management, it can be clearly distinguished between the case of a mobile node (mobile terminal) with multiple interfaces changing a connection point for a certain interface and the case of a simultaneous connection being conducted using another interface while suppressing generation of signaling and an increase of processing load on a network entity and preventing a delay.

In addition to the above-stated configuration, the network node of the present invention further includes information generation/notification means that, when the connection judgment means judges that the connection by the mobile terminal is generated due to a new connection using another interface, newly generates specific information corresponding to the connection by the mobile terminal, and notifies the mobile terminal of the specific information for storage.
With this configuration, at the time when a connection is made first with any network node in the network system, the mobile terminal can store the specific information.

In addition to the above-stated configuration, in the network node of the present invention, the specific information exists corresponding to each of the plurality of interfaces of the mobile terminal.
With this configuration, different specific information can be set for each of the plurality of interfaces of the mobile terminal.

In addition to the above-stated configuration, in the network node of the present invention, the specific information includes information allowing the connection judgment means to make the judgment based on the specific information only and without making an inquiry to other network nodes.
This configuration eliminates the necessity for the network node to make an inquiry to other network nodes, thus lowering the signaling amount and lessening processing load on the network node.

In addition to the above-stated configuration, in the network node of the present invention, the specific information includes an interface identifier of the mobile terminal.
With this configuration, different specific information can be set for each of the plurality of interfaces of the mobile terminal.

In addition to the above-stated configuration, in the network node of the present invention, the specific information includes a binding identifier used when a location of the mobile terminal is updated.
With this configuration, different specific information can be set for each of a plurality of bindings registered for the mobile terminal.

In addition to the above-stated configuration, in the network node of the present invention, the specific information includes a sequence number used when a location of the mobile terminal is updated.
With this configuration, different specific information can be set for each of a plurality of binding updates conducted for the mobile terminal.

In addition to the above-stated configuration, in the network node of the present invention, the specific information includes identification information of a network node with which the mobile terminal connected before the handover.
With this configuration, a network node with which the mobile terminal connected before the handover can be understood based on the specific information.

In addition to the above-stated configuration, the network node of the present invention further includes information request means that requests information required for the judgment by the connection judgment means from the network node with which the mobile terminal connected before the handover, specified by the identification information.
With this configuration, a context transfer request can be made to the network node with which the mobile terminal connected before the handover, and processing can be performed based on the acquired context.

In addition to the above-stated configuration, the network node of the present invention is adapted so that, when the mobile terminal makes a connection, the specific information is transmitted with a layer 2 message or a layer 3 message.
With this configuration, the specific information can be transmitted through layer 2 or layer 3.

In addition to the above-stated configuration, in the network node of the present invention, the specific information includes checksum to detect tampering of the specific information.
With this configuration, unauthorized tampering of the specific information can be prevented.

In addition to the above-stated configuration, in the network node of the present invention, the specific information includes information indicating an expiration time.
With this configuration, a period when the specific information can be used effectively can be understood.

In addition to the above-stated configuration, the network node of the present invention further includes information update/notification means that updates the specific information with the expiration time being expired or the specific information with the expiration time being about to expire, and notifies the mobile terminal of the updated specific information for storage.
With this configuration, effective specific information can be stored in the mobile terminal.

In addition to the above-stated configuration, the network node of the present invention further includes inter-domain connection change judgment means that judges, based on the specific information, whether or not the mobile terminal moves between local mobility domains that are managed by different operators and have a roaming agreement.
This configuration can suppress generation of signaling and an increase of processing load on a network entity and can prevent a delay, when the mobile terminal moves between local mobility domains.

In addition to the above-stated configuration, the network node of the present invention further includes access authentication means that, when the inter-domain connection change judgment means judges that the mobile terminal moves between local mobility domains, performs access authentication by referring to information kept in a local mobility domain with which the mobile terminal connected before movement.
With this configuration, when the mobile terminal moves between local mobility domains, information on the local mobility domain with which the mobile terminal connected before the movement is utilized, thus suppressing generation of signaling and an increase of processing load on a network entity and preventing a delay.

In order to fulfill the above-stated object, a mobile terminal of the present invention is connectable with a network system that provides a network based local mobility management service, and includes: a plurality of wireless communication interfaces that are connectable with a network node functioning as a gateway of the network system; information management means that, when connecting with the gateway, receives specific information corresponding to a connection by the mobile terminal from the gateway, and stores the specific information; and information notification means that, when connecting with a new gateway, notifies the new gateway of the specific information stored in the information management means, thus allowing the new gateway to judge whether the connection made by the mobile terminal is generated due to a handover with a connection point being changed at any interface or due to a new connection using another interface.
With this configuration, in a network conducting network based local mobility management, it can be clearly distinguished between the case of a mobile node (mobile terminal) with multiple interfaces changing a connection point for a certain interface and the case of a simultaneous connection being conducted using another interface while suppressing generation of signaling and an increase of processing load on a network entity and preventing a delay.

In addition to the above-stated configuration, in the mobile terminal of the present invention, the specific information includes information allowing the network node to make the judgment based on the specific information only and without making an inquiry to other network nodes.
This configuration eliminates the necessity for the network node to make an inquiry to other network nodes, thus lowering the signaling amount in and lessening processing load on the network node.

In addition to the above-stated configuration, the mobile terminal of the present invention is adapted so that, when connecting with the network node, the specific information is transmitted with a layer 2 message or a layer 3 message.
With this configuration, the specific information can be transmitted through layer 2 or layer 3.

In addition to the above-stated configuration, in the mobile terminal of the present invention, the specific information includes information indicating an expiration time.
With this configuration, a period when the specific information can be used effectively can be understood.

In addition to the above-stated configuration, the mobile terminal of the present invention further includes information deletion means that deletes the specific information with the expiration time being expired from the specific information stored in the information management means.
With this configuration, the specific information with the expiration time being expired can be deleted.

In addition to the above-stated configuration, the mobile terminal of the present invention further includes update request means that requests the network node to update the specific information with the expiration time being expired or the specific information with the expiration time being about to expire.
With this configuration, the specific information becoming ineffective (or the specific information being about to ineffective) can be understood, and a request can be made to update the specific information.

In addition to the above-stated configuration, the mobile terminal of the present invention moves between local mobility domains that are managed by different operators and have a roaming agreement.
With this configuration, when the mobile terminal moves between local mobility domains, generation of signaling and an increase of processing load on a network entity can be suppressed, and a delay can be prevented.

A network node and a mobile terminal of the present invention are configured as stated above, and has an effect of enabling, in a network conducting network based local mobility management, clear distinction between the case of a mobile node (mobile terminal) with multiple interfaces changing a connection point for a certain interface and the case of a simultaneous connection being conducted using another interface while suppressing generation of signaling and an increase of processing load on a network entity and preventing a delay.

### BRIEF DESCRIPTION OF THE DRAWINGS

Fig. 1 illustrates an exemplary network configuration to describe a network based local mobility management system in one embodiment of the present invention and the conventional technique.
Fig. 2A illustrates an exemplary preferable configuration of a mobile node in one embodiment of the present invention.
Fig. 2B schematically illustrates an exemplary function implemented in a MAG in one embodiment of the present invention.
Fig. 3 is a flowchart illustrating an exemplary preferable operation of the mobile node in one embodiment of the present invention.
Fig. 4A is a sequence chart illustrating a first operation example where a mobile node conducts a handover.
Fig. 4B is a sequence chart illustrating a first operation example where a mobile node conducts a simultaneous connection.
Fig. 5A is a sequence chart illustrating a second operation example where a mobile node conducts a handover.
Fig. 5B is a sequence chart illustrating a second operation example where a mobile node conducts a simultaneous connection.
Fig. 6A is a sequence chart illustrating a third operation example where a mobile node conducts a handover.
Fig. 6B is a sequence chart illustrating a third operation example where a mobile node conducts a simultaneous connection.
Fig. 7 illustrates exemplary contents included in a token stored in a mobile node in one embodiment of the present invention.
Fig. 8 illustrates an exemplary communication system to describe the case where a token is passed between local domain networks in one embodiment of the present invention.
Fig. 9A illustrates an exemplary communication system to describe Embodiment A supporting movement of a mobile terminal in one embodiment of the present invention.
Fig. 9B is a sequence chart to describe Embodiment A supporting movement of a mobile terminal in one embodiment of the present invention.
Fig. 9C is a sequence chart to describe Embodiment B where a mobile terminal has a plurality of interfaces in one embodiment of the present invention.

### BEST MODE FOR CARRYING OUT THE INVENTION

The following describes embodiments of the present invention, with reference to the drawings.

This specification discloses a method and a device enabling a mobile node to receive specific information (token) from a MAG currently connecting and store the same, and pass the specific information to the next MAG when the mobile node conducts a new connection. As disclosed in this specification, according to the technique of the present invention, the number of signaling messages transmitted from MAGs to a LS (local server) can be reduced, and processing load on the MAGs and the LS can be lessened.

The token is, for example, generated by a MAG when a mobile node (MN) firstly connects with a local network domain conducting network based local mobility management, and is stored in the MN. Thereafter, the MN simply notifies the next MAG of the token when the connection is switched to another connection point (conducting a handover), for example, whereby the MAG can understand that this connection is a handover by referring to the token. Herein, this token contains contents transparent to the mobile node, which means that the mobile node doesn't need to understand what kind of information is contained in this token.

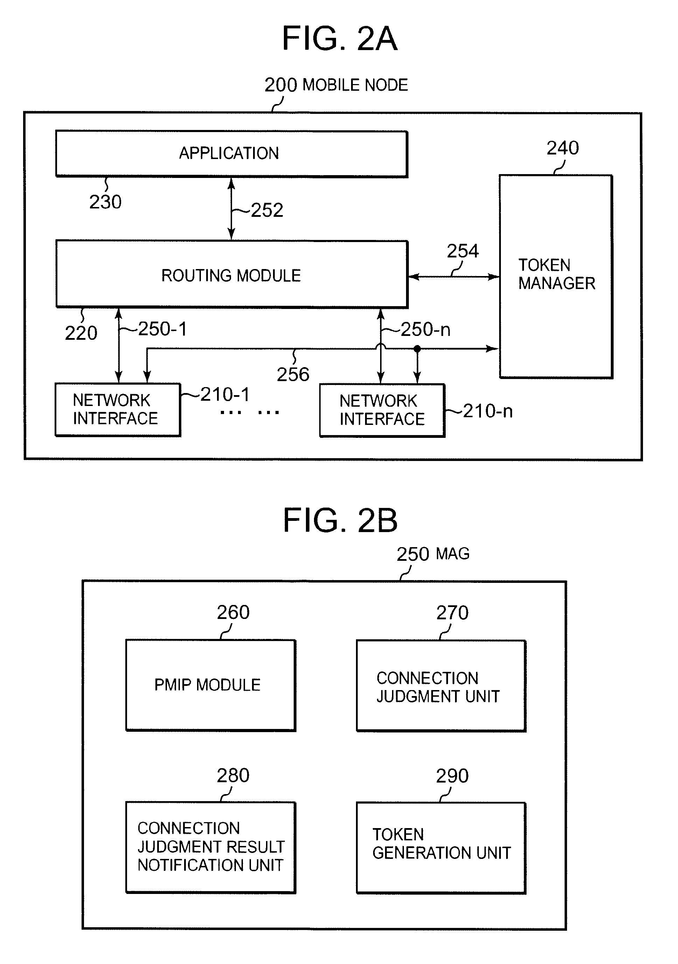

Referring to Fig. 2A, the following describes a preferable configuration of the mobile node according to the present invention. Fig. 2A illustrates an exemplary preferable configuration of the mobile node in one embodiment of the present invention. A mobile node 200 illustrated in Fig. 2A includes one or a plurality of network interfaces 210-1 to 210-n, a routing module 220, an application 230, and a token manager 240. Herein, n denotes a positive integer, meaning the presence of n pieces of network interfaces. In the following, any network interfaces 210-1 to 210-n may be described as a network interface 210.

The one or plurality of network interfaces 210-1 to 210-n is a functional block including every hardware and software required for the mobile node to conduct a communication with another node via any communication medium. Using terms known in the related technical field, the network interface 210 may represent a communication component such as layer 1 (physical layer) and layer 2 (data link layer), firmware, a driver, a communication protocol and the like. Note that the mobile node 200 may have one or a plurality of network interfaces 210.

The routing module 220 conducts processing to decide a packet output method to an appropriate program in the application 230 and a packet sending method to an appropriate network interface 210 (a packet transmission method to the outside of the mobile node 200). Using terms known in the related technical field, the routing module 220 may represent implementation of a communication protocol of layer 3 (network layer) in IPv4 (IP version 4) and IPv6 (IP version 6) and the like.

Signal/data paths 250-1 to 250-n allow the routing module 220 to transmit/receive a packet with respect to appropriate network interfaces 210-1 to 210-n. Similarly, a signal/data path 252 allows the routing module 220 to transmit/receive a packet with respect to an appropriate program in the application 230.

The application 230 is a functional block including all protocols and programs existing at a higher network layer in a stack of a communication protocol. This application 230, for example, includes a transport layer protocol or a session layer protocol such as a transmission control protocol (TCP), a stream control transport protocol (SCTP), or a user datagram protocol (UDP), and programs and software required for a communication with other nodes. As stated above, the signal path 252 enables transmission of a packet between the routing module 220 and the application 230.

The token manager 240 has a function of storing and managing a token provided from a MAG. When a token is received at layer 2, it is configured that the received token is stored in the token manager 240 from the network interface 210 through a signal path 256. On the other hand, when a token is received at layer 3, it is configured that the received token is stored in the token manager 240 from the routing module 220 through the signal path 254. The network interface 210 and the routing module 220 can read a token stored in the token manager 240 through the signal path 256 and the signal path 254, respectively, and transmit the same to the outside of the mobile node 200.

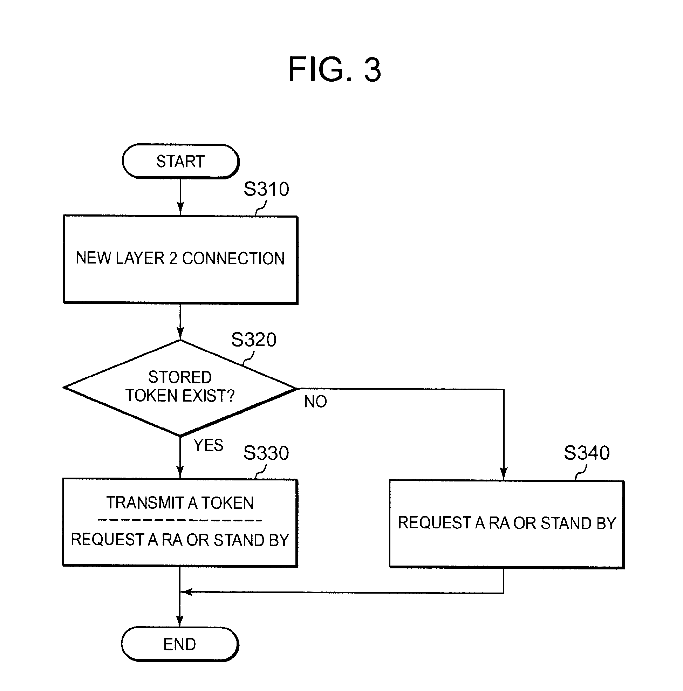

Referring next to Fig. 3, a preferable operation of the mobile node according to the present invention will be described below. Fig. 3 illustrates an exemplary preferable operation of the mobile node in one embodiment of the present invention.

Firstly, at Step S310, the mobile node detects a new layer 2 connection.
This new layer 2 connection can be detected by an interface that tries to connect with a new access point in an IEEE802. 11 system, for example, or can be detected by establishment of a connection with a new communication base station by a wireless channel in a 3G/4G cellular method.

Next, at Step S320, the mobile node checks whether a token is stored in the token manager 240 or not. If a token is stored in the token manager 240, at Step S330, the mobile node transmits the token to a MAG, and actively requests a router advertisement (RA) message or passively stands by. On the other hand, if a token is not stored in the token manager 240, at Step S340, the mobile node simply requests a RA message actively, or passively stands by. Note here that at Step S340 the mobile node may notify a MAG of information indicating the absence of a token in the token manager 240.

As stated above, the contents of the token stored in the token manager 240 of the mobile node 200 are transparent to the mobile node 200. For instance, as a preferable exemplary token used in one embodiment of the present invention, information uniquely identifying a mobile node may be used, for example, and information uniquely identifying each of a plurality of interfaces may be managed and stored so as to correspond to each interface. More specifically, various types of information can be used, including a home network prefix that the mobile node refers to, an interface identifier of the mobile node with which a MAG connects, a binding identifier (BID) specifying binding, identification information of a MAG connected before a handover, and the like.

Fig. 2B schematically illustrates an exemplary function implemented in a MAG in one embodiment of the present invention. A MAG 250 illustrated in Fig. 2B has a connection judgment unit 270 and a connection judgment result notification unit 280 in addition to a PMIP module 260 that implements a function of a network based local mobility management protocol (e.g., PMIP).

The connection judgment unit 270 of the MAG 250 has a function of, based on the token notified from the mobile node, judging whether the mobile node conducts a handover or tries to conduct a simultaneous connection using a new interface. The judgment by the connection judgment unit 270 is conducted by a comparison between an interface identifier identifying an interface used by the mobile node for connection and an interface identifier specified by the token (interface identifier included in the token). If these two pieces of information are the same, it is judged that the mobile node conducts switching of a connection point (i.e., the interface of the mobile node conducts a handover). On the other hand, if these two pieces of information are different (or if any token is not notified or if information indicating the absence of a token is included), it is judged that the mobile node tries to conduct a connection to a new connection point using an interface that has not connected with the local network domain so far.

The connection judgment result notification unit 280 of the MAG 250 has a function of notifying a LMA of a judgment result (i.e., whether the connection by the mobile node is due to a handover or due to a simultaneous connection) decided by the connection judgment unit 270. If the connection judgment unit 270 judges a handover, the connection judgment result notification unit 280 controls to insert the same BID as that used before the handover in a PBU message transmitted to the LMA, so as to indicate that updating is conducted due to the handover. On the other hand, in the case of a simultaneous connection, the connection judgment result notification unit 280 generates (or acquires) a new BID when transmitting a PBU message to the LMA. Herein, in the case of the simultaneous connection, the MAG may acquire a correct BID value to be used by making an inquiry to a LS (local server) in accordance with the conventional operation.

A token generation unit 290 has a function of, in the case of the simultaneous connection judged by the connection judgment unit 270, generating a token using the acquired new BID and other information, and transmitting this token to the mobile node to store the same in the token manager of the mobile node.

These functions can eliminate processing of an effectiveness test of a BID when the mobile node conducts a handover, for example, thus realizing a decrease in signaling or lowering of processing load on the LS. Further, the LMA becomes able to distinguish between binding of a handoff and binding of a simultaneous connection without transmitting a further message to the local server.

Note that as for the connection judgment, the token obtained from the mobile node may be transferred as it is as well as the PBU message to the LMA without analyzing the token at the MAG, so that the LMA conducts the judgment for connection. That is, the MAG is configured to have a token transfer function only and the LMA is configured to have a function as the connection judgment unit 270, whereby there is no need to notify the MAG of a judgment result, thus allowing the LMA to directly obtain a correct BID to be used. Although this method is different in the functions shared, the effects obtained are clearly equivalent.

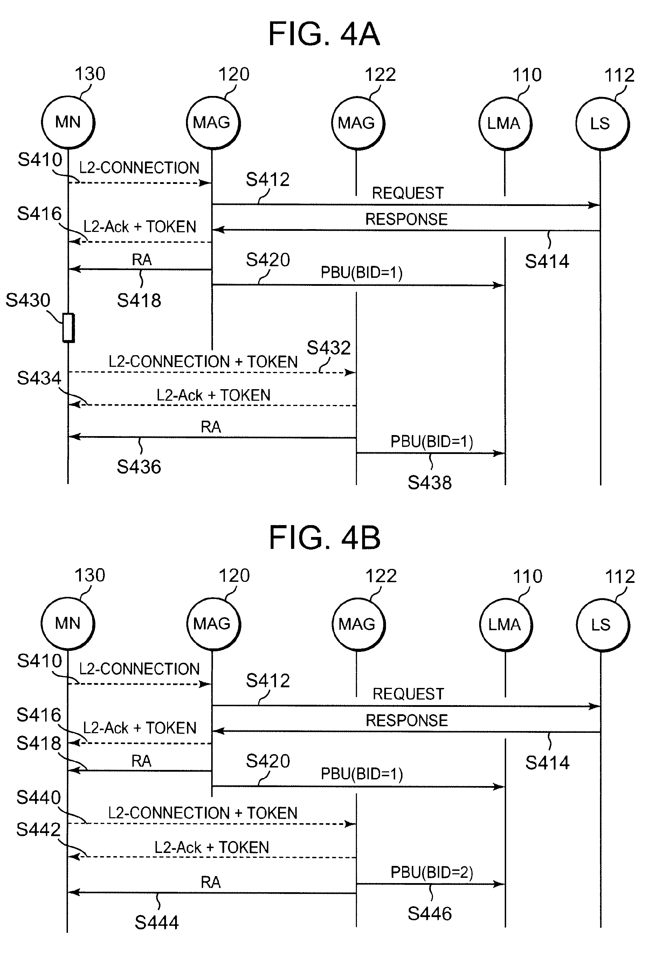

Referring next to Figs. 4A and 4B, a specific example (a first operation example) in one embodiment of the present invention will be described. Fig. 4A illustrates a sequence chart showing the first operation example where a mobile node conducts a handover in one embodiment of the present invention, and Fig. 4B illustrates a sequence chart showing the first operation example where a mobile node conducts a simultaneous connection in one embodiment of the present invention.

Both of Figs. 4A and 4B illustrate an exemplary operation based on the network configuration illustrated in Fig. 1, Fig. 4A illustrating a message sequence when the MN 130 conducts a handover from the MAG 120 to the MAG 122, and Fig. 4B illustrating a message sequence when the MN 130 firstly conducts a simultaneous connection with the MAG 120 and the MAG 122.

In Fig. 4A, the MN 130 firstly starts a layer 2 connection with the MAG 120 (Step S410). Herein, as a layer 2 connection message (L2-connection) transmitted at Step S410, a frame related to IEEE802.11, a signal related to a cellular network, an Extensible Authentication Protocol (EAP) start message, a Point-to-Point Protocol (PPP) setup message and the like can be used, for example, which are not limiting ones.

Herein, in this example, let that the connection at Step S410 is a first connection with the local network domain 102, and the MN 130 has not stored a token. Therefore, at Step S412, the MAG 120 transmits a request message (request) to the LS 112 to make the LS 112 verify credential of the MN 130. Then, at Step S414, the LS 112 verifies credential of the MN 130, and thereafter transmits a response message (response) to the MAG 120. This response message includes a home network prefix notified to the MN 130, a BID value to be used (e.g., "1"), and other related information.

Then, at Step S416, the MAG 120 transmits a confirmation message (L2-Ack + token) for the layer 2 connection by the MN 130. The MAG 120 generates a token based on the home network prefix notified to the MN 130, the BID value to be used and other related information included in the response message from the LS 112, for example, and inserts the token in the confirmation message transmitted at Step S416. Herein, the home network prefix notified to the MN 130, the BID value to be used and other related information can be used as the token as they are, or information obtained by combining the BID value to be used (in this case "1") and the home network prefix can be used as the token.

Thereafter, the MAG 120 notifies the MN 130 of the home network prefix using a RA message at Step S418, and transmits a PBU message (BID=1) to the LMA 110 at Step S420. Thereby, an address of the MN 130 configured with the prefix notified to the MN 130 can be associated with the MAG 120 at the LMA 110 for management.

Herein, let that, following any processing at Step S430, the MN 130 moves so as to switch the connection to the MAG 122. The MN 130 keeps the token received from the MAG 120 and stored before the connection switching, and at Step S432 transmits a layer 2 connection message (L2-connection + token) including this token when connecting with the MAG 122.

Based on the information extracted from this token, e.g., if an interface identifier of the interface used and an interface identifier stored in the token are the same, the MAG 122 can estimate that this connection by the MN 130 is conducted by a handover. Further, the MAG 122 can extract the home network prefix from the token. Thereby, the MAG 122 doesn't need to conduct request/response processing repeatedly with the LS 112. The MAG 122 can simply transmit a confirmation message (L2-Ack + token) for layer 2 connection at Step S434 without making an inquiry to the LS 112.

Then, the MAG 122 notifies the MN 130 of the home network prefix using a RA message at Step S436, and transmits a PBU message (BID=1) to the LMA 110 at Step S438. Herein, since the connection by the MN 130 is conducted by a handover, the MAG 122 uses the same BID value (in this case, "1") in the PBU message transmitted at Step S438 as the BID value (BID value included in the PBU message transmitted at Step S420) used by the MAG 120. Thus, binding with the PBU message transmitted from the MAG 122 at Step S438 overwrites binding generated by the PBU message transmitted from the MAG 120 at Step S420.

In the connection confirmation processing at Step S434, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

On the other hand, in Fig. 4B, the MN 130 conducts a simultaneous connection with the MAG 122 while keeping the connection with the MAG 120 instead of conducting a handover after the connection with the MAG 120. Since a message sequence (Steps S410 to S420) corresponding to the first connection with the MAG 120 is the same as in Fig. 4A, the description thereof has been omitted.

Herein, after the connection with the MAG 120, the MN 130 starts a second interface to start a connection with the MAG 122. This is indicated by a layer 2 connection message (L2-connection + token) at Step S440. At this time, the MN 130 inserts a token in a connection message transmitted at Step S440 and transmits the same to the MAG 122.

Based on the information extracted from this token, e.g., if an interface identifier of the interface used and an interface identifier stored in the token are different, the MAG 122 can estimate that this connection by the MN 130 is a simultaneous connection. Further, the MAG 122 can extract the home network prefix from the token. Thereby, the MAG 122 can understand that the connection by the MN 130 is a simultaneous connection without repeatedly conducting request/response processing with the LS 112. In this case, the MAG 122 may make an inquiry to the LS 112 in accordance with the conventional operation, and obtain a BID value related to this connection (a value different from the above-stated BID value "1", e.g., "2") from the LS 112.

Then, the MAG 122 transmits a confirmation message (L2-Ack + token) for layer 2 connection at Step S442 and notifies the MN 130 of the home network prefix using a RA message at Step S444.

Further, the MAG 122 transmits a PBU message (BID=2) to the LMA 110 at Step S446. Herein, the PBU message transmitted at Step S446 relates to binding with a connection using an interface different from the interface specified by the BID value "1", and the MAG 122 uses a BID value "2" different from the BID value (BID value "1" included in the PBU message transmitted at Step S420) used by the MAG 120. Thus, it can be clearly distinguished between the binding with the PBU message transmitted from the MAG 122 at Step S446 and the binding generated by the PBU message transmitted from the MAG 120 at Step S420, thus preventing mutual overwriting.

In the connection confirmation processing at Step S442, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

Thus, according to the above-stated first operation example in one embodiment of the present invention, it can be surely distinguished as to whether a connection by a mobile node is due to a handover (e.g., Fig. 4A) or due to a simultaneous connection (e.g., Fig. 4B), and an appropriate PBU message can be transmitted to a LMA by storing and reading a token with the mobile node using layer 2 signaling. Note here that this operation can lead to a decrease in message exchange processing with the LS, thus realizing the object of the present invention.

The sequence charts in Figs. 4A and 4B illustrate, as the first operation example in one embodiment of the present invention, a token transmitted using layer 2 signaling between MAGs and a mobile node. As another preferable embodiment, it is also possible to transmit a token using layer 3 signaling.

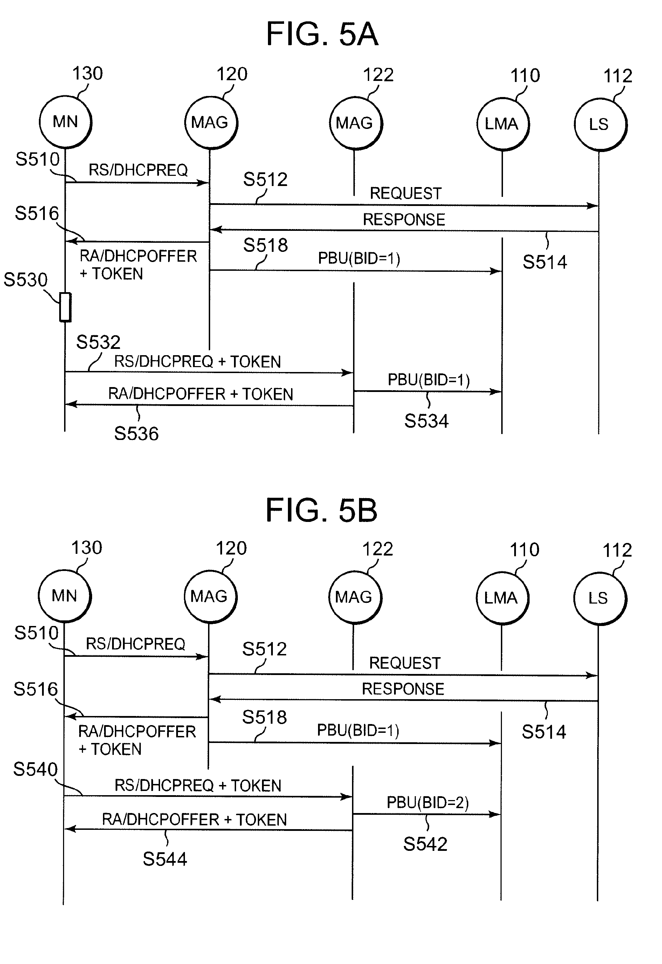

Referring to Figs. 5A and 5B, the following describes a specific example (a second operation example) in one embodiment of the present invention. Fig. 5A illustrates a sequence chart showing the second operation example where a mobile node conducts a handover in one embodiment of the present invention, and Fig. 5B illustrates a sequence chart showing the second operation example where a mobile node conducts a simultaneous connection in one embodiment of the present invention.

In Fig. 5A, the MN 130 firstly starts a layer 3 connection with the MAG 120 (Step S510). Herein, a layer 3 connection message (RS/DHCPREQ) transmitted at Step S510 can be implemented using a route solicitation (RS) message, a dynamic host configuration protocol (DHCP) request message or the like, which are not limiting ones.

Herein, in this example, let that the connection at Step S510 is a first connection with the local network domain 102, and the MN 130 has not stored a token. Therefore, at Step S512, the MAG 120 transmits a request message (request) to the LS 112 to make the LS 112 verify credential of the MN 113. Then, at Step S514, the LS 112 verifies credential of the MN 130, and thereafter transmits a response message (response) to the MAG 120. This response message includes a home network prefix notified to the MN 130, a BID value to be used (e.g., "1"), and other related information.

Then, the MAG 120 transmits a confirmation message (RA/DHCPOFFER + token) for layer 3 connection by the MN 130 at Step S516. Herein, the MAG 120 can implement this using a Router Advertisement (RA) message, a DHCP address providing response message or the like, which are not limiting ones. The MAG 120 generates a token based on the home network prefix notified to the MN 130, the BID value to be used and other related information included in the response message from the LS 112, for example, and inserts the token in the confirmation message transmitted at Step S516.

Further, the MAG 120 transmits a PBU message to the LMA 110 at Step S518. Thereby, an address of the MN 130 (allocated by DHCP or configured with the prefix notified to the MN 130) is associated with the MAG 120 at the LMA 110 for management.

Herein, let that, following any processing at Step S530, the MN 130 moves so as to switch the connection to the MAG 122. The MN 130 keeps the token received from the MAG 120 and stored before the connection switching, and at Step S532 transmits a RS message or a DHCP request message (RS/DHCPREQ + token) including this token when connecting with the MAG 122.

Based on the information extracted from this token, e.g., if an interface identifier of the interface used and an interface identifier stored in the token are the same, the MAG 122 can estimate that this connection by the MN 130 is conducted by a handover. Further, the MAG 122 can extract the home network prefix from the token. Thereby, the MAG 122 doesn't need to conduct request/response processing repeatedly with the LS 112. The MAG 122 can simply transmit a RA message or a DHCP response message (RA/DHCPOFFER + token) for layer 3 connection at Step S536 without making an inquiry to the LS 112.

Further, at Step S534, the MAG 122 transmits a PBU message (BID=1) to the LMA 110. Herein, since the connection by the MN 130 is conducted by a handover, the MAG 122 uses the same BID value (in this case, "1") in the PBU message transmitted at Step S534 as the BID value (BID value included in the PBU message transmitted at Step S518) used by the MAG 120. Thus, binding with the PBU message transmitted from the MAG 122 at Step S534 overwrites binding generated by the PBU message transmitted from the MAG 120 at Step S518.

In the connection confirmation processing at Step S536, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

On the other hand, in Fig. 5B, the MN 130 conducts a simultaneous connection with the MAG 122 while keeping the connection with the MAG 120 instead of conducting a handover after the connection with the MAG 120. Since a message sequence (Steps S510 to S518) corresponding to the first connection with the MAG 120 is the same as in Fig. 5A, the description thereof has been omitted.

Herein, after connection with the MAG 120, the MN 130 starts a second interface to start a connection with the MAG 122. This is indicated by transmission of a RS message or a DHCP request message (RS/DHCPOFFER + token) at Step S532. At this time, the MN 130 inserts a token in the message transmitted at Step S532 and transmits the same to the MAG 122.

Based on the information extracted from this token, e.g., if an interface identifier of the interface used and an interface identifier stored in the token are different, the MAG 122 can estimate that this connection by the MN 130 is a simultaneous connection. Further, the MAG 122 can extract the home network prefix from the token. Thereby, the MAG 122 can understand that the connection by the MN 130 is a simultaneous connection without repeatedly conducting request/response processing with the LS 112. In this case, the MAG 122 may make an inquiry to the LS 112 in accordance with the conventional operation, and obtain a BID value related to this connection (a value different from the above-stated BID value "1", e.g., "2") from the LS 112.

Further, the MAG 122 simply transmits a RA message or a DHCP response message (RS/DHCPOFFER + token) at Step S544, thus making a response to the MN 130. Further, the MAG 122 transmits a PBU message (BID=2) to the LMA 110 at Step S542. Herein, the PBU message transmitted at Step S542 relates to binding with a connection using an interface different from the interface specified by the BID value "1", and the MAG 122 uses a BID value "2" different from the BID value (BID value "1" included in the PBU message transmitted at Step S518) used by the MAG 120. Thus, it can be clearly distinguished between the binding with the PBU message transmitted from the MAG 122 at Step S542 and the binding generated by the PBU message transmitted from the MAG 120 at Step S518, thus preventing mutual overwriting.

When transmitting the response message at Step S544, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

Thus, according to the above-stated second operation example in one embodiment of the present invention, it can be surely distinguished as to whether a connection by a mobile node is due to a handover (e.g., Fig. 5A) or due to a simultaneous connection (e.g., Fig. 5B), and an appropriate PBU message can be transmitted to a LMA by storing and reading a token with the mobile node using layer 3 signaling. Note here that this operation can lead to a decrease in message exchange processing with the LS, thus realizing the object of the present invention.

The sequence charts in Figs. 4A and 4B illustrate, as the first operation example in one embodiment of the present invention, a token transmitted using layer 2 signaling between MAGs and a mobile node, and the sequence charts in Figs. 5A and 5B illustrate, as the second operation example in one embodiment of the present invention, a token transmitted using layer 3 signaling between MAGs and a mobile node. These embodiments are predicated on a token containing necessary and sufficient data so that the MAG 122 can derive necessary information (BID value to be used, and information concerning whether it is a handoff or a simultaneous connection) concerning the binding of the mobile node from the token.

Note that those skilled in the art would understand that a token can be transmitted using methods other than these. For instance, commands of IEEE802.21, information services, event services can be used to store, search, and update a token.
A token can be stored at the access authentication stage by using AAA signaling such as EAP, Diameter, and Radius.

On the other hand, in a third operation example in one embodiment of the present invention described below, a token does not contain all necessary and sufficient data and contains just only information indicating a MAG with which the mobile mode connected before. In this case also, a MAG can distinguish between the case of a handover and the case of a simultaneous connection using a token without exchanging extra messages with a local server.

The third operation example in one embodiment of the present invention has an advantage of reducing a token in size by configuring the token with identification information of a MAG only, for example. This is effective when a storage capacity of the mobile node is not very large (or there is no room), or when a signaling frame used to transmit a token can transmit an only limited size of token.

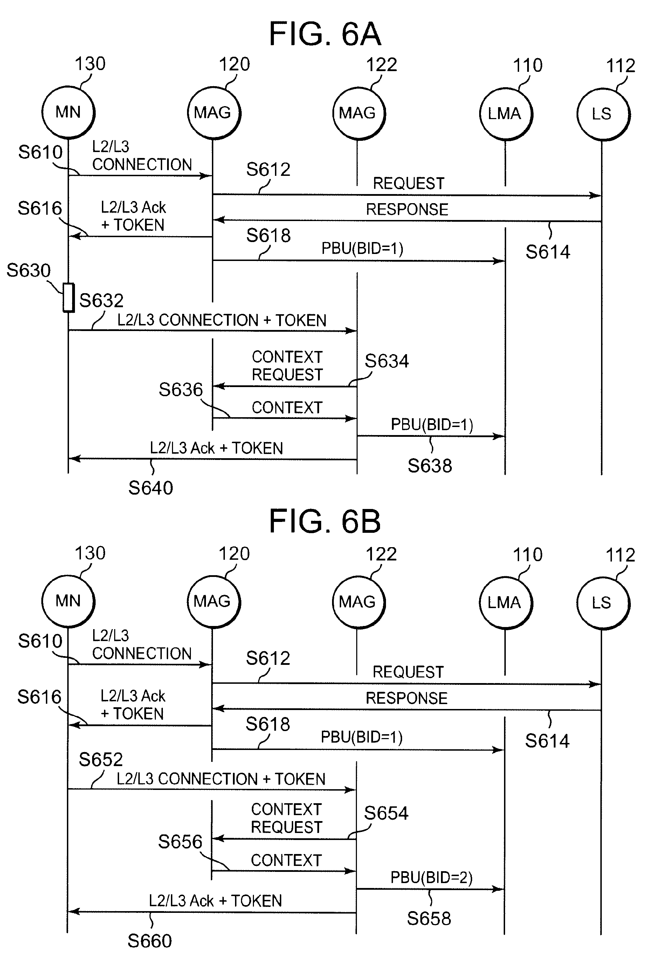

Referring next to Figs. 6A and 6B, a specific example (a third operation example) in one embodiment of the present invention will be described. Fig. 6A illustrates a sequence chart showing the third operation example where a mobile node conducts a handover in one embodiment of the present invention, and Fig. 6B illustrates a sequence chart showing the third operation example where a mobile node conducts a simultaneous connection in one embodiment of the present invention.

In the descriptions referring to Figs. 4A, 4B, 5A, and 5B, the present invention is apparently available irrespective of a token exchange method (e.g., a method using a layer 2 or layer 3 message) between MAGs and a mobile node. Thus, in Figs. 6A and 6B, notations of L2/L3 connection and notations of L2/L3 ack message will be used without making a distinction between layer 2 messages and layer 3 messages. Herein, in the following, it is also not distinguished whether a token is transmitted with layer 2 or layer 3.

In Fig. 6A, the MN 130 firstly starts a connection (L2/L3 connection) with the MAG 120 (Step S610). Herein, in this example, let that the connection at Step S601 is a first connection with the local network domain 102, and the MN 130 has not stored a token. Therefore, at Step S612, the MAG 120 transmits a request message (request) to the LS 112 to make the LS 112 verify credential of the MN 130. Then, at Step S614, the LS 112 verifies credential of the MN 130, and thereafter transmits a response message (response) to the MAG 120. This response message includes a home network prefix notified to the MN 130, a BID value to be used (e.g., "1"), and other related information.

Then, at Step S616, the MAG 120 transmits a confirmation message (L2/L3 Ack + token) for the connection by the MN 130. The MAG 120 generates a token based on the identification information of the MAG 120, for example, and inserts the token in the confirmation message transmitted at Step S616. In this case, this token enables to specify that the MAG 120 is an access router of the MN 130.

Further, the MAG 120 transmits a PBU message to the LMA 110 at Step S618. Thereby, an address of the MN 130 (allocated by DHCP or configured with the prefix notified to the MN 130) is associated with the MAG 120 at the LMA 110.

Assuming that following any processing at Step S630, the MN 130 moves so as to switch the connection to the MAG 122. The MN 130 keeps the token received from the MAG 120 and stored before the connection switching, and at Step S632 transmits this token to the MAG 122 when connecting with the MAG 122.

Based on the information extracted from this token, the MAG 122 can understand that the MN 130 connected with the MAG 120. Then, at Step S634, the MAG 122 transmits a context request message (context request) to the MAG 120 specified from the token.

With this context request message, a request is made from the MAG 122 to the MAG 120 to provide information concerning the BID value, the home network prefix, the interface identifier and the like used when the MN 130 connected with the MAG 120. Then, such information is transmitted from the MAG 120 to the MAG 122 using a context message (context) at Step S636.

Based on the information included in the context message, if an interface identifier of the interface used and an interface identifier stored in the token are the same, the MAG 122 can estimate that this connection by the MN 130 is conducted by a handover. Thus, instead of repeating request/response processing with the LS 112 that manages the local network domain 102 as a whole, the MAG 122 can request a context from the MAG 120 with which the MN 130 connected before the handover and obtain the context.

Then, the MAG 122 transmits a response message (L2/L3 Ack + token) at Step S640, thus making a response to the connection by the MN 130, and transmits a PBU message (BID=1) to the LMA 110 at Step S638.

Herein, since the connection by the MN 130 is conducted by a handover, the MAG 122 uses the same BID value (in this case, "1") in the PBU message transmitted at Step S638 as the BID value (BID value included in the PBU message transmitted at Step S618) used by the MAG 120. Thus, binding with the PBU message transmitted from the MAG 122 at Step S638 overwrites binding generated by the PBU message transmitted from the MAG 120 at Step S618.

In the connection confirmation processing at Step S640, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load. Moreover, in this case, a target from which a context is requested (destination of a context request) is fixed to the initial connected MAG (MAG 120), and an operation example concerning a context request and a response in this embodiment should be interpreted otherwise based on this change. However, the effects obtained therefrom are clearly not affected.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

On the other hand, in Fig. 6B, the MN 130 conducts a simultaneous connection with the MAG 122 while keeping the connection with the MAG 120 instead of conducting a handover after the connection with the MAG 120. Since a message sequence (Steps S610 to S618) corresponding to the first connection with the MAG 120 is the same as in Fig. 6A, the description thereof has been omitted.

Herein, after the connection with the MAG 120, the MN 130 starts a second interface to start a connection with the MAG 122. At this time, since the MN 130 keeps the token stored in the MAG 120 before the connection switching, the MN 130 transfers this token to the MAG 122 when connecting with the MAG 122 by a transmission of a message (L2/L3 connection + token) at Step S652.

Based on the information extracted from this token, the MAG 122 specifies that the MN 130 connected with the MAG 120. As a result, at Step S654, the MAG 122 transmits a context request message (context request) to the MAG 120. Thereby, a request is made from the MAG 122 to the MAG 120 to provide information concerning the BID value, the home network prefix, the interface identifier and the like used when the MN 130 connected with the MAG 120. Then, such information is transmitted from the MAG 120 to the MAG 122 using a context message (context) at Step S656.

Based on the information included in the context message, for example, if an interface identifier of the interface used and an interface identifier stored in the token are different, the MAG 122 can estimate that this connection by the MN 130 is conducted by a simultaneous connection. Thus, instead of repeating request/response processing with the LS 112 that manages the local network domain 102 as a whole, the MAG 122 can request a context from the MAG 120 with which the MN 130 connected before the handover and obtain the context.

Then, the MAG 122 transmits a response message (L2/L3 Ack + token) at Step S660, thus making a response to the connection by the MN 130, and transmits a PBU message (BID=2) to the LMA 110 at Step S658. Herein, the PBU message transmitted at Step S638 relates to binding with a connection using an interface different from the interface specified by the BID value "1", and the MAG 122 uses a BID value "2" different from the BID value (BID value "1" included in the PBU message transmitted at Step S618) used by the MAG 120. Thus, it can be clearly distinguished between the binding with the PBU message transmitted from the MAG 122 at Step S638 and the binding generated by the PBU message transmitted from the MAG 120 at Step S618, thus preventing mutual overwriting.

When transmitting the response message at Step S660, it is desirable that the MAG 122 transmits a newly updated token to the MN 130. However, it is also possible for the MN 130 to continuously use the token stored at the stage of connecting with the local network domain 102 first without updating the token stored in the MN 130. In this case, since the information in the token is not updated from the initial one, the token cannot contain information updated as needed. However, since the token generation processing can be conducted only at the initial connection, this leads to an effect of reducing processing load. Moreover, in this case, a target from which a context is requested (destination of a context request) is fixed to the initial connected MAG (MAG 120), and an operation example concerning a context request and a response in this embodiment should be interpreted otherwise based on this change. However, the effects obtained therefrom are clearly not affected.

Further, in this case, the MAG makes a judgment as to whether the connection is due to a handover or a simultaneous connection based on the information extracted from the token. However, the LMA may have a connection judgment function so that this LMA makes a judgment of the connection based on the token as it is transferred from the MAG as stated above. In this case, such a judgment of the connection by the LMA allows the LMA itself to understand an appropriate BID.

Thus, according to the above-stated second operation example in one embodiment of the present invention, it can be surely distinguished as to whether a connection by a mobile node is due to a handover (e.g., Fig. 5A) or due to a simultaneous connection (e.g., Fig. 5B), and an appropriate PBU message can be transmitted to a LMA by storing and reading a token with the mobile node. Note here that this operation can be implemented by requesting a context from the MAG with which the mobile node connected before the handover without conducting message exchange with the local server, thus lowering processing load on the LS and reducing a delay, thus realizing the object of the present invention.

As stated above, various types of information can be used as a token. As the simplest example, a token includes only identification information of the MAG with which the mobile node currently connects. This allows a MAG receiving the token to make an inquiry (request) concerning context transfer to the MAG specified by the token. The MAG receiving the token can estimate, based on the information obtained by the context transfer, whether the mobile node conducts a simultaneous connection or a handover.

For instance, the MAG specified by the token can transfer the interface identifier that the mobile node uses when connecting this MAG by context transfer. The MAG receiving the token compares the interface identifier included in the context transfer with the interface identifier used by the mobile node in the connection with the MAG receiving the token, thus making it possible to distinguish whether the connection by this mobile node is due to a handover or a simultaneous connection. Further, the MAG receiving the token can decide a BID value used in the PBU message concerning this mobile node based on the information obtained by the context transfer.

As another preferable aspect, for instance, information such as an interface identifier used, a BID value, a sequence number used in a PBU message may be included in a token. Thereby, a MAG receiving the token can obtain necessary information by referring to the token, so that there is no need to obtain context transfer from the MAG with which the mobile node connected before the handover.

Herein, since a token may contain different types of contents, a type-length-value (TLV) format is desirably used for the configuration of the token. In this case, the token has a plurality of different blocks, and each of the plurality of blocks includes a type field, a length field, and a value field.

As the type field, types of information to be inserted in a value field such as MAG identification information before the handover, an interface identifier, a sequence number used before the handover, a BID value used before the handover and the like are indicated. As the length field, a block size (bit number or an octet number) is indicated. This configuration enables a token to be in a flexible and extensible format, so that each system can select optimum types of information to be stored in the token.

Since a token is stored in a mobile node and is used in a MAG, the token desirably has any preventive measure to avoid tampering by a malicious mobile node. For instance, checksum generated by encryption is preferably used to make a MAG protect integrity of a token. Such protection of a token can be realized by various methods.

For instance, a token can be protected by a method where each MAG owns a pair of a private key and a public key. When a MAG generates a token, the MAG also generates checksum for the token and encrypts the checksum using the private key. Then, this encrypted checksum (corresponding to encrypted signature information in conventional technique) is inserted in the token.

On the other hand, all MAGs existing in the same local network domain can understand the public key. A MAG generating a token can be specified by the token, and other MAGs understand the public key of the MAG generating the token, and therefore the other MAGs decrypt this signature and compare the decoded checksum with their own calculated checksum from the token. If the token is not altered by a third party, these two tokens will be identical. Such verification can keep integrity of the token.

In the case where there is no need for a mobile node to understand the contents of a token stored, a MAG generating the token can encode the token as a whole using a private key thereof. Thereby, it becomes impossible for the mobile node to tamper with the contents of the token as well as referring to (decoding) the contents of the token. Since the network based local mobility management domain is normally managed firmly, all MAGs existing in the same local network domain can easily use the same encoding/decoding key.

In order to avoid a third party from stealing a token and presenting the stole token to other MAGs in the local network domain, the token may include a network access identifier (NAI) of a mobile node storing the token therein. Thereby, when presenting the token to a MAG, it is possible for the MAG to check whether the network access identifier of the mobile node agrees with the one described in the token or not. If the network access identifier does not agree, the MAG simply can abandon the token, and in this case an operation similar to the case of no token being presented is conducted.

In the case where a token is used to transmit information such as a sequence number used in a PBU message, for example, it is desirable to describe any expiration time in the token and make the token invalid at the time of expiration. This can avoid a MAG from operating based on expired old information.

For instance, let that a first MAG generates a token and sets a final value in sequence numbers used for the token as 500. This token is passed to a second MAG, and confirmation is made that the sequence number is 500. Next, the second MAG uses a larger sequence number (e.g., 600). This sequence number is desirably large enough so as not to exceed the sequence number that the first MAG uses. However, in the case where this token is stored in the mobile node for a very long time, there is a possibility that the second MAG uses a value exceeding the sequence number 600 before receiving the token. Thus, a lifetime value relating to the token can avoid the second MAG from conducting an operation based on old information.

Further, the expiration of the lifetime can be used to prevent a malicious mobile node from using a token stored before (replay attack in conventional techniques). Moreover, it is also possible for a mobile node to fully examine the lifetime value of the token, thus enabling to delete the expired token from its own memory or, if an old token is about to expire or is already expired, requesting from the MAG a new token to overwrite the old token. Note here that even when the mobile node does not request, the MAG can generate a new token to overwrite the old token when the old token is about to expire or is already expired.

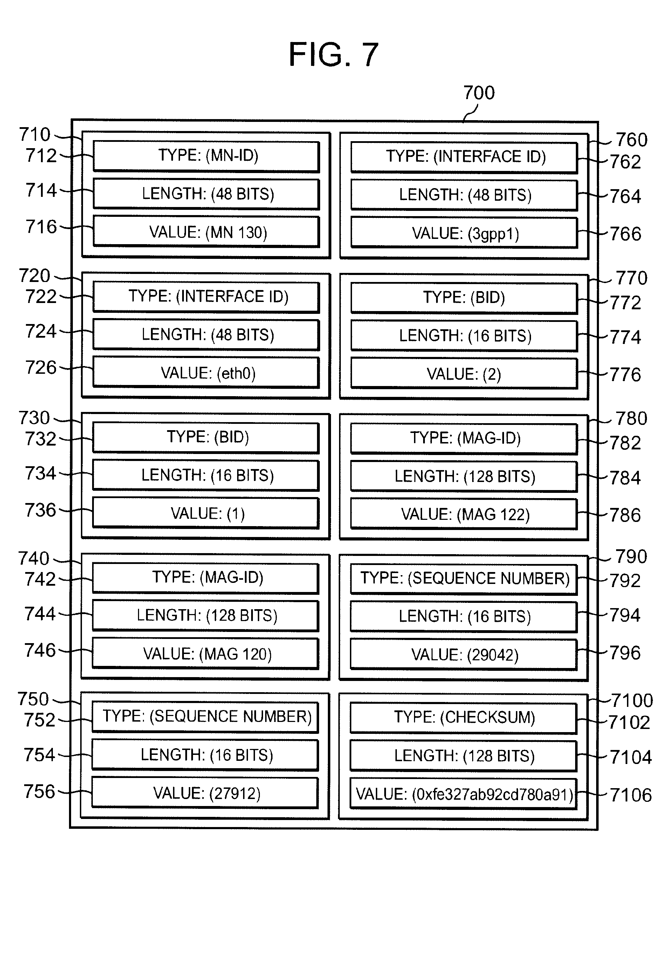

Fig. 7 illustrates exemplary contents included in a token stored in a mobile node in one embodiment of the present invention. Herein, let that a MN 130 has two connections (simultaneous connection) of an IEEE802.11 wireless connection (a first connection) with a MAG 120 and a cellular 3GPP connection (a second connection) with a MAG 122. Fig. 7 illustrates an exemplary token according to this MN 130.

This token includes 10 different TLV blocks.

A block 710 stores a network access identifier of the MN 130 as indicated with a type field 712 (MN-ID) and a value field 716 (MN 130).

A block 720 stores a first interface identifier of the MN 130 as indicated with a type field 722 (interface ID) and a value field 726 (eth0). In this example, an interface identifier (eth0) identifying IEEE802.11 interface is stored.

A block 730 stores a binding identifier used in the first interface as indicated with a type field 732 (BID) and a value field 736 (1). In this example, a BID value "1" is stored.

A block 740 stores identification information of the MAG 120 (a value identifying the MAG 120) with which the first interface connects as indicated with a type field 742 (MAG-ID) and a value field 746 (MAG 120).

A block 750 stores a sequence number used in the first interface as indicated with a type field 752 (sequence number) and a value field (27912). In this example, a sequence number "27912" is stored.

A block 760 stores an identifier of the second interface of the MN 130 as indicated with a type field 762 (interface ID) and a value field (3gpp1) 766. In this example, an interface identifier (3gpp1) identifying a cellular interface is stored.

A block 770 stores a binding identifier used in the second interface as indicated with a type field 772 (BID) and a value field 776 (2). In this example, a BID value "2" is stored.

A block 780 stores identification information (information identifying the MAG 122) of the MAG with which the second interface connects as indicated with a type field 782 and a value field 786.

A block 790 stores a sequence number used in the second interface as indicated with a type field 792 (sequence number) and a value field (29042). In this example, a sequence number "29042" is stored.

A block 7100 is indicated with a type field 7102 (checksum) and a value field 7106 (0xfe327ab92cd780a91), including an encryption checksum concerning the token.

Herein, as indicated in the example illustrated in Fig. 7, a token can keep information on multiple interfaces of the same mobile node. When receiving the token, a MAG can extract only information concerning the interface that the mobile node used for connection.

By way of the example illustrated in Fig. 7, assume the case where the MN 130 connects with the MAG 124 using a cellular interface. When receiving a token, the MAG 124 can extract information (blocks 760, 770, 780, 790) on the cellular interface (i.e., 3gpp1). Based on the thus obtained token, the MAG 124 can decide the BID value to be used (i.e., "2") and the minimum sequence number to be used (i.e., "29402"). Then, the MAG 124 updates values in these blocks and returns the updated token to the MN 130 for storage.

In the example illustrated in Fig. 7, each mobile node in the entire local network domain 102 uses one token, which is not a limiting one. For instance, it is also possible to store one token for each interface of a mobile node. In the case of the example illustrated in Fig. 7, two different tokens stored in the MN 130 can exist.

A first token relates to the first interface (i.e., "eth0"), and the first token includes blocks 710, 720, 730, 740, 750, and 7100. A second token relates to the second interface (i.e., "3gpp1"), and the second token includes blocks 710, 760, 770, 780, 790, and 7100. When the MN 130 switches the second interface from the MAG 122 to the MAG 124, the MN 130 can simply pass the token concerning the second interface to the MAG 124.

The token illustrated in Fig. 7 is a just one example, and in an actual system a token may contain more information or the least possible information only. For instance, it may include a block storing a lifetime value of a token and another block storing a home network prefix allocated to the mobile node. The blocks 750 and 790 for sequence number may not exist, for example.

Further, a token itself may be embedded in the address allocated to the mobile node, for example. Herein, IPv6 address is in 128 bits, whereas a network prefix part is normally in 64 bits. That is, 64 bits (host identifier part) remain to identify the mobile node. When a unique prefix is used for each mobile node, there is no need to use the host identification part for host identification. According to this embodiment, a MAG can generate a token available as the host identification part.

Such a token embedded in the address may be in a form obtained by compressing information on the mobile node, or may be used as an index used to allow the next MAG to easily obtain actual profile concerning the mobile node. For instance, the address of the mobile node may be one that can identify a MAG creating a token. Thereby, the next connecting MAG can make a communication with this MAG (the MAG identified by the token) and directly obtain profile of the mobile node. This leads to an advantage of keeping compatibility with a legacy node that may not receive a token in other forms.

Patent Document 4 discloses a technique to generate a temporary token outside of a service network, thus allowing a mobile node to use the token and to be authenticated by a wireless network.

Meanwhile, in the present invention, after the LS 112 approves access of the mobile node, the local network domain 102 can generate credential for temporary authentication. This credential is passed to a MAG, and the MAG can incorporate the credential in a token stored in the mobile node. Thereafter, in the case where the mobile node connects with another MAG existing in the same local network domain 102, the other MAG checks the temporary credential stored in the token, thus enabling verification of authenticity of the mobile node. Thus, there is no need to transmit the credential on the mobile node again to the local server 112 for verification.

Note here that the present invention is greatly different from the technique disclosed in Patent Document 4 in at least the following three aspects.

Firstly, the credential in the present invention is generated in the local network domain, and is not generated outside of a service network.
Secondly, the credential in the present invention is generated based on a result of a success in authentication conducted in advance by the local server, and is not generated freely.
Thirdly, an object of the technique disclosed in Patent Document 4 is to realize quick authentication and prevent a delay by authentication, whereas an object of the present invention is to decrease signaling and lower processing load that can concentrate on a certain network entity.

In the above-stated embodiment of the present invention, the present invention is used in a single local domain network implementing a network based local mobility management protocol, thus allowing a MAG or a LMA to distinguish between a handover and a simultaneous connection of a MN. However, the technique according to the present invention is also applicable to achieve other effects

For instance, the technique according to the present invention can be used as a mechanism capable of obtaining information on a mobile node without referring to a central server by a MAG every time (every time the MAG changes a connection). Information on the mobile node such as a home network prefix allocated to the mobile node is stored in a token, and the mobile can pass this token to a MAG connecting later. This is especially effective for the case where a large scale of network based local mobility management domain such as a 3G cellular wireless communication network is arranged.

In such a large scale network, several millions of subscribes may exist, for example. In the case where a MAG makes an inquiry to the central server every time a handover of the mobile node occurs, processing load on the central server will be excessive. The central server needs to search related data from enormous database, thus further slowing the processing.

On the other hand, according to the present invention, mechanism letting respective MAGs exchange information is realized. A token stored in a mobile node is used, whereby there is no need for a MAG to search other MAGs using any broadcast means. Only when the mobile node firstly connects with any MAG in a local network domain, the MAG needs to read information from the central local server. Thereafter, such information is exchanged (transmitted) between the MAGs via the token stored in the mobile node.

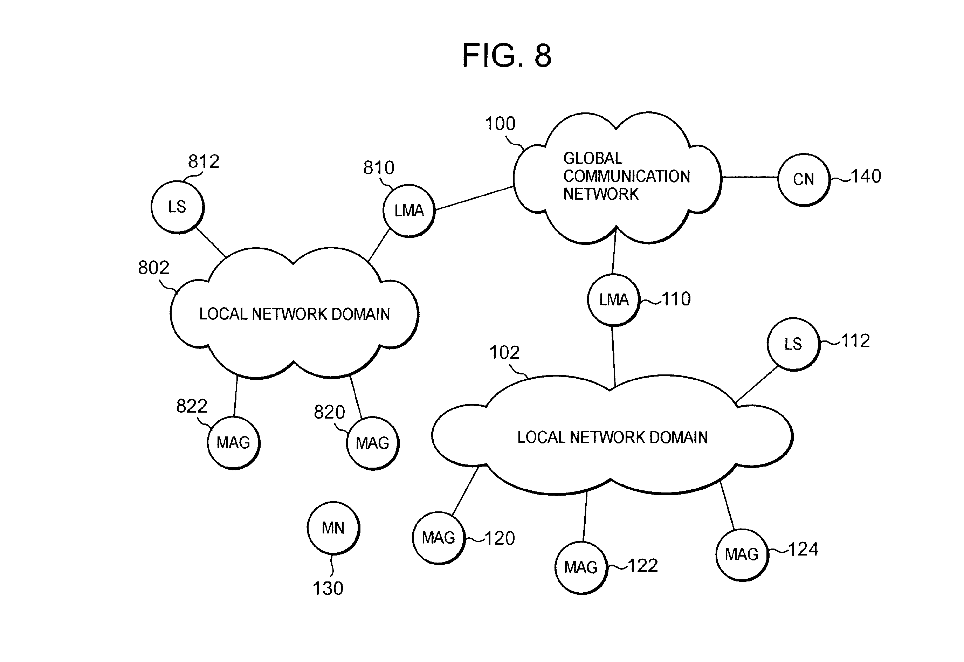

The transmission of a token between MAGs may be further expanded so that a token can be passed from a certain local network domain to another local network domain. The following describes an example where a token is passed between local domain networks, with reference to Fig. 8. Fig. 8 illustrates an exemplary communication system to describe the case where a token is passed between local domain networks in one embodiment of the present invention. Fig. 8 illustrates two local network domains 102 and 802. The local network domain 102 includes a LMA 110, a LS 112, and MAGs 120, 122 and 124. The local network domain 802 includes a LMA 810, a LS 812, and MAGs 820 and 822. The two local network network domains 102 and 802 connect with a global communication network (e.g., the Internet) 100, and a CN 140 connects with the global communication network 100 to make a communication with a MN 130.

In the communication system illustrated in Fig. 8, let that the MN 130 starts to move from the local network domain 102 to connect with a MAG 120. As described in the above embodiment of the present invention, the MAG 120 generates a token and makes the MN 130 store the token. Further, the MAG 120 transmits proxy binding update to the LMA 110 regarding an address allocated to the MN 130. Next, when the MN 130 moves away from the local network domain 102 to connect with the MAG 820 in the local network domain 802, the MN 130 can pass this token to the MAG 820 during the connection with the MAG 820. By referring to this token, the MAG 820 can make a judgment that the MN 130 moves from another local mobility domain. Herein it is desirable that the token contains information to identify a local mobility domain to which the MAG generating the token belongs (or a specific entity in the local mobility domain) inserted therein. As a result two major effects can be realized.

The first major effect resides in that, when the local network domain 802 has a roaming agreement with the local network domain 102, identity of the MN 130 (i.e., that is truly the MN 130) can be certificated by a token stored in the MN 130. Thereby, the certification processing can be simplified. For instance, let that a token specifies the LS 112 in the local network domain 102. As a result, the MAG 820 can make a direct communication with the LS 112 for access authentication without relaying through the LS 812 in the local network domain 802. Further, even in the case of relaying through the LS 812 in the local network domain 802, an inquiry source of access authentication can transfer the inquiry to the LS 112 promptly because the LS 112 in the local network domain 102 has been specified.

The second major effect resides in that, if a roaming agreement between the two local network domains 102 and 802 permits, a token in the MN 130 can identify the LMA 110 in the local network domain 102. Thereby, the MN 820 can transmit proxy binding update to the LMA 110, thus allowing the MN 130 to continuously use an address obtained from the local network domain 102. As a result, when the CN 140 transmits a packet to the MN 130, the LMA 110 transfers this packet to the MAG 820, so that the MAG 820 can transfer the packet to the MN 130. Further, for a chain configuration of PMIP (LMA operates as a MAG for another LMA, and a tunnel by PMIP is configured as chain by transferring proxy binding update), the LMA 810 can transfer the proxy binding update promptly to the LMA 110, thus allowing the MN 130 to continuously use an address obtained from the local network domain 102. As a result, when the CN 140 transmits a packet to the MN 130, the LMA 110 transfers this packet to the MAG 820 via the LMA 810, so that the MAG 820 can transfer the packet to the MN 130.

This especially relates to a 3G scenario. In the 3G scenario, the LMA 110 functions as a packet data network gateway (PDNGW) of the local network domain (3GPP network) 102, and the MAG 820 functions as an evolved packet data gateway (ePDG) of the local network domain (3GPP network) 802. In the 3G network, if an appropriate relationship can be obtained, an ePDG belonging to an external network can execute signaling concerning a mobile node directly with a home PDNGW. In order to confirm such a relationship, a token stored in the mobile node can be used. Herein, the network configuration in the above-stated 3G scenario is one example, and as a node corresponding to the MAG, for example, a gateway (Serving Gateway, Access Gateway, PDG: Packet Data Gateway) corresponding to a node with a terminal or a PDNGW serving as a relay point in a chain configuration can be considered.

Further, the MAG 820 can transfer token information to the LMA 810 in the same local network domain 802. At this time, the LMA 810 specifies the LMA 110 based on the token, and searches an address allocated to the MN 130 from the LMA 110. This address may be obtained from the token itself, or the LMA 810 may obtain this address via the LMA 110. Thereby, the same address can be allocated to the MN 130, and the MAG 820 associates this address of the MN 130 with the address of the MAG 820 itself and registers the same to the LMA 810. Then, the LMA 810 transmits binding information to the LMA 110, whereby when the CN 140 transmits a packet to the MN 130, the LMA 810 can transfer this packet to the MN 130 via the MAG 820.

The method according to the above-stated first major effect has an advantage of reducing the number of nodes conducting packet transfer between the LMA 110 and the MN 130 (i.e., an advantage of achieving quick packet transfer). Meanwhile, in the method according to the above-stated second major effect, when the MN 130 changes a connection point from the MAG 820 to the MAG 822, there is no need to inform the LMA 110 of such. Thus, the method according to the above-stated second major effect has an advantage of reducing a transmission amount of a singling packet between the two local network domains 102 and 802.

In the 3G scenario, a mobile node may need to obtain a different token depending on a different purpose. For instance, when the MN 130 moves to the local network domain 802, the MN 130 may obtain a new token from the local network domain 802. Otherwise, the MN 130 may wish to continuously keep a previous token obtained in the local network domain 102. The MN 130 uses this previous token and may keep a previous connection that has been established during the connection with the local network domain 102. Herein, the new token may be used for another purpose such as local breakout (one of the methods of accessing from a destination network directly to a global communication network without a home network intervening therebetween).

As stated above, the present invention can be used not only to distinguish between a handover and a plurality of simultaneous handovers but also for another purpose to support movement of a mobile terminal. The following describes two embodiments A and B.

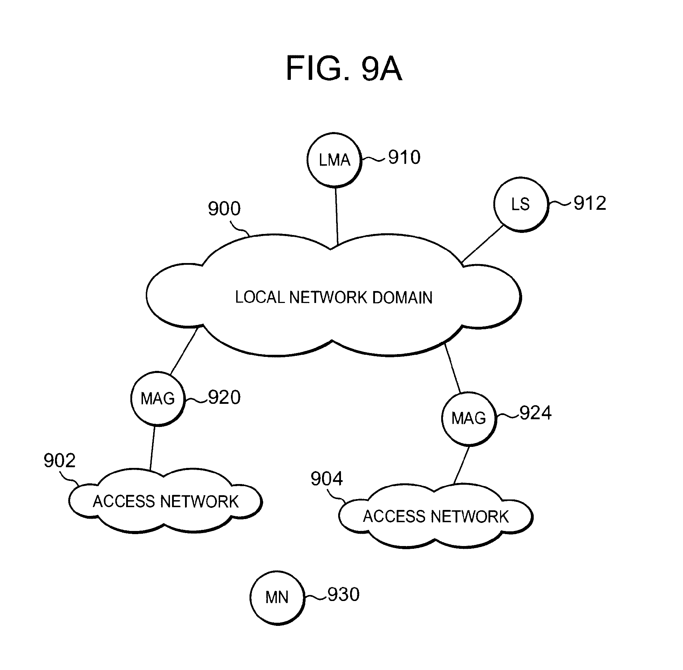

Firstly, Embodiment A will be described referring to a network configuration illustrated in Fig. 9A. Fig. 9A illustrates an exemplary communication system to describe Embodiment A supporting movement of a mobile terminal in one embodiment of the present invention. Fig. 9A illustrates a local mobility domain 900 having a LMA 901, a LS 912, two MAGs 920 and 924.

A MN 930 moves in a local area network 900 so as to connect with the MAG 920 through an access network 902, or to connect with the MAG 924 through an access network 904. Herein, the access networks 902 and 904 may be the same or different with respect to access techniques such as 3G cellular, WiMAX and wireless LAN.

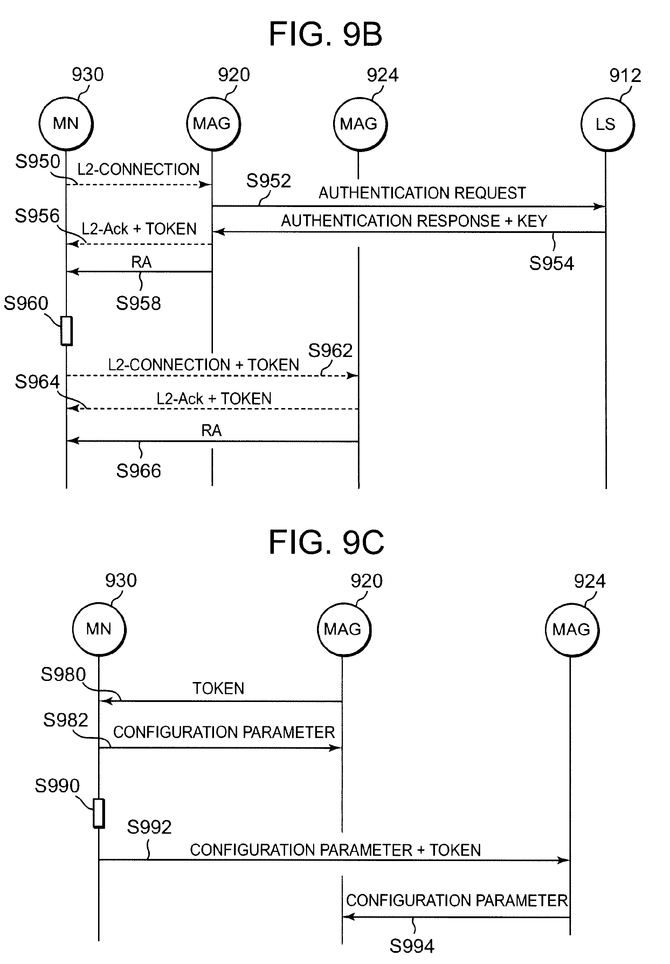

In Embodiment A of one embodiment of the present invention, pre-authentication is conducted. Fig. 9B illustrates a sequence chart to describe Embodiment A supporting movement of a mobile terminal in one embodiment of the present invention. In Fig. 9B, a MN 930 firstly connects with a MAG 920 via an access network 902. This is indicated by transmission of L2 connection signaling (L2-connection) at Step S950. Receiving this L2 connection signaling, the MAG 920 makes an inquiry to a LS 912 with an authentication request. The LS 912 verifies reliability of the MN 930 and then makes a response with an authentication response 930. Herein, the authentication response transmitted at Step S954 may include a key to allowing the MAG 920 to establish a security relationship with the MN 930. Then, at step S956, the MAG 920 makes a response to the connection with the MN 930 with a configuration message including a token (L2-Ack + token). Thereby, the MAG 920 can make the MN 930 store the token. As a result of this processing, a layer 2 connection is completed, and the MAG 920 can notify the MN 930 of a router notification message at Step S958.

At Step S960 after a certain time period has passed, the MN 930 may decide whether the second interface is started to make a connection with the MAG 924 via the access network 904 or a handover is conducted to the MAG 924. This operation is indicated by transmission of L2 connection signaling (L2-connection + token) at Step S962. Herein, the MN 930 can transfer a token obtained beforehand to the MAG 924. This token allows the MAG 924 to establish a new security relationship with the MN 930 without conducting an authentication request/response processing with the LS 912. The MAG 924 directly confirms a connection with signaling at Step S964, and can notify a RA (Router Advertisement) at Step S966. Herein, the notification (L2-connection + token) at Step S964 may make the MN 930 store a new token or an updated token.

In Embodiment B in one embodiment of the present invention, another interface is used to conduct authentication. Such a case includes a mobile node having two interfaces, as in a first interface connecting with a MAG 920 via an access network 902 and a second interface connecting with a MAG 924 via an access network 904, for example. The mobile node may search information of the access network 902 as a connection target of the first interface or may configure parameters (e.g., setup of paging and flow filter control) regarding the access network 902 while setting the first interface in a sleep mode so as to save power consumption. In the case of the conventional technique used, the mobile node has to start the first interface and execute configuring and information searching using the first interface.

On the other hand, in the present invention, as illustrated in the message sequence chart of Fig. 9C, there is no need to start the first interface. Fig. 9C illustrates a sequence chart to describe Embodiment B where a mobile terminal has a plurality of interfaces in one embodiment of the present invention.

In Fig. 9C, while the first interface is still active (i.e., while the first interface connects with the MAG 920), at Step S980, a MAG 920 makes a MN 930 store a token. This token may be a token generated by the MAG 920 when the MN 930 connects with the MAG 920, or may be a token that the MN 930 requests from the MAG 920 for preparation to shift the first interface to a sleep mode. Before the first interface becomes a sleep mode, the MN 930 can read information and configure parameters on the access network 902 using the first interface as indicated with transmission of a signaling message (configuration parameter) at Step S982.

After the first interface becomes a sleep mode at Step S990, the MN 930 can use the second interface to read information and configure parameters on the access network 902. This is indicated with a signaling message (configuration parameter + token) transmitted from the MN 930 to the MAG 924 at Step S992. In order to realize this operation, the MN 930 transmits the token stored in the MAG 920 to the MAG 924 via the second interface. The MAG 924 can confirm from this token that the MN 930 is authorized to search information of the access network 902 and instructs the MAG 924 to conduct an operation. Herein, this operation is indicated by transmission of a signaling message (configuration parameter) at Step S994, i.e., the MAG 924 can read information from the MAG 920 and configure parameters regarding the MAG 920 based on information received from the second information of the MN 930. The MAG 920 further can make a verification. In this case, receiving an operation request and a token with the signaling message received from the MN 930 at Step S992, the MAG 924 transfers the token to the MAG 920 by transmission of the signaling message at Step S994.

Although the above embodiment describes the case where a token is generated by a MAG, those skilled in the art would understand that the present invention is not limited to such a case. A token may be generated by any entity (e.g., LMA or local server) in a local network domain, and be passed to a mobile node via a MAG. In the case of a 3G network, a mobile node may connect via an unreliable access network (e.g., wireless LAN). In this case, the mobile node uses a point-to-point encapsulation tunnel to connect with ePDG, so that a token can be passed to the mobile node through the tunnel via ePDG. Alternatively, the token may not be passed to the mobile node via a MAG. For instance, when the mobile node firstly connects with the local network domain, a token may be generated by an AAA server and be passed to a mobile node during authentication/approval processing for storage.

In an ePDG scenario, there may be a case where a mobile node using a plurality of interfaces has one or more connections with the same ePDG. For instance, there may be a case where a connection is a point-to-point tunnel to ePDG via wireless LAN, and another connection is via another access network (WiMAX in an unreliable state and different unreliable wireless LAN) controlled by the same ePDG. In such a case, a generated token may be reused (because the same ePDG is specified). Further, profiles related to the two interfaces may be associated with the same token.

The above embodiment describes the case where a MAG stores a token in a mobile node at the time of connection. In another preferable embodiment, a MAG may generate a token when a request comes from a mobile node, and store the same in the mobile node. For instance, when it is detected that one of the interfaces of a mobile node conducts a handover, the mobile node makes a request for token. At this time, the mobile node requests, before the handover, a MAG with which the interface currently connects to generate a token so as to allow the mobile node to conduct the handover effectively.

As another example, a mobile node may operate so that different interfaces connect with the same local network domain. Herein, the mobile node can understand the same local network domain based on IEEE802.21 information service or information set beforehand, for example. The mobile node can request to generate a token to be used in this new interface. In the case where the local network domain with which a mobile node currently connects is a 3GPP network, the mobile node may request a token that is used for the purpose of local breakout (e.g., a token used for an IP multimedia service).

As stated above, a token can be generated for various different purposes. Thus, a mobile node may store a plurality of tokens at the same time in association with one interface. For instance, one token may be used for a handover, another token may be used for local breakout, and still another token may be used for route optimization using an address of local breakout. All of these tokens are managed by the token manager 240 illustrated in Fig. 2A. The token manager 240 may index these tokens. Thereby, an appropriate token can be read based on various standards, and can be passed to access networks. Such standards may include purposes of tokens (uses), a current peer address with which a mobile node communicates, a current communication session type (IP multimedia service and normal voice call, for example) and other related settings.

The present specification provides drawings and description so that the present invention can be the most practical and preferable embodiment. However, it would be obvious for those skilled in the art that the present invention can be modified variously for the design of elements of the above nodes and details of the parameters without departing from the scope of the present invention.

For instance, a mobile node (mobile terminal) according to the present invention may include both of a mobile router and a mobile host moving in a local domain network. A MAG also may be mobile (can move). Although the above-stated example uses a TLV structure for a token, a token can have any format to store information, for example, a structure defined beforehand (e.g., XML (extensible Mark-up Language) format) may be used.

Further, in the above-stated embodiment, when a simultaneous connection is conducted to a plurality of MAGs using a plurality of interfaces, each of a first interface and a second interface can keep a token. In this case, an operation of the second interface at the time of initial start starts from a state not having a token (although it has a token in the first interface, this is not used in the second interface), and each interface will obtain a token at the time of initial start. After that, as long as they connect with the same local network domain, the token is maintained/updated for each interface. At this time also, the object to distinguish whether a connection of the mobile node is due to a handover or a simultaneous connection based on an interface identifier and a difference in BID values can be achieved, so that it can be judged that that is the connection of the same mobile node based on an identifier specific to the mobile node and information from a LS and the like.

Further, in the above-stated embodiment, when a simultaneous connection is conducted to a plurality of MAGs using a plurality of interfaces, there may be the case where the second interface connects with the same MAG as the first interface. In this case also, the present embodiment obviously operates without problems because the second MAG in the drawing can be considered as the same node as the first MAG. The present invention exemplifies a network configuration as a simple configuration illustrated in Fig. 1. However, the configuration of a local network domain conceivably has varieties including a roaming relationship between a plurality of operators. For instance, a MAG has been described as an access router of a mobile node. In another possible configuration, however, a MAG may be a boundary router with a different access network (including roaming), and a mobile node once connects with the different access network and thereafter connects with the MAG as the boundary router via the access network. In this case also, although various parameters, procedure to reach a MAG, communication procedure of MAGs, LS and LMA are different, the exchange of a token according to the present invention is obviously applicable thereto in a similar manner.

The present specification describes based on the precondition that there are a plurality of network interfaces of a mobile node. However, there may be a plurality of logical interfaces to embody the present invention. For instance, one wireless part may be shared among a plurality of connection methods, which may be switched at a rate whose change can be ignored from aspects of a network interface, or a logical link is maintained at layer 2, whereby it can be configured so as to operate in a similar manner to the case where a network part connects with a network via a plurality of interfaces.

A mobile node may be configured with a plurality of communication devices, for example, an extrapolated or incorporated 3GPP communication device module or non-3GPP communication device module may be mounted to a computer such as a personal computer. In such a different type of mobile node also, the present invention can achieve a similar effect.

The present specification describes based on the precondition that a mobile node makes a wireless communication with a base station via a transmission/reception part. However, a mobile node may make a wired communication with an access point corresponding to a base station, from which a similar effect can be obtained concerning a connection to the access point.

Note that each functional block used in the descriptions of the above-stated embodiments may be typically implemented as a LSI (Large Scale Integration) that is an integrated circuit. These blocks may be individually configured as one chip, or one chip may include a part or all of the functional blocks. LSIs may be called an IC (Integrated Circuit), a system LSI, a super LSI, and an ultra LSI depending on the degree of integration.

A technique for integrated circuit is not limited to LSI, but an integrated circuit may be achieved using a dedicated circuit or a general-purpose processor. After manufacturing a LSI, a FPGA (Field Programmable Gate Array) capable of programming and a reconfigurable processor capable of reconfiguring connection and setting of a circuit cell inside a LSI may be used.

Further, if a technique for integrated circuit that replaces LSIs becomes available by the development of a semiconductor technique or derived techniques, functional blocks may be naturally integrated using such a technique. For instance, biotechnology may be applied thereto.

### INDUSTRIAL APPLICABILITY

A network node and a mobile terminal of the present invention have an effect of enabling, in a network conducting network based local mobility management, clear distinction between the case of a mobile node (mobile terminal) with multiple interfaces changing a connection point for a certain interface and the case of a simultaneous connection being conducted using another interface while suppressing generation of signaling and an increase of processing load on a network entity and preventing an additional delay, and is applicable to a communication technical field in a packet exchange type data communication network system (especially a network system implementing a network based local mobility management protocol).

## Claims

1. A network node functioning, in a network system having a location management node that manages a location of a mobile terminal and provides a network based local mobility management service with the mobile terminal, as a gateway with which the mobile terminal having a plurality of wireless communication interfaces is connectable, comprising:
communication means that provides a connection service that allows the mobile terminal to connect with the network system;
information reception means that receives specific information from the mobile terminal when a connection is made by the mobile terminal;
connection judgment means that judges, based on the specific information, whether the connection made by the mobile terminal is generated due to a handover with a connection point being changed at any interface or due to a new connection using another interface; and
connection judgment result notification means that notifies a judgment result by the connection judgment means when update information is transmitted to the location management node to update a location of the mobile terminal.

2. The network node according to claim 1, comprising information generation/notification means that, when the connection judgment means judges that the connection by the mobile terminal is generated due to a new connection using another interface, newly generates specific information corresponding to the connection by the mobile terminal, and notifies the mobile terminal of the specific information for storage.

3. The network node according to claim 1, wherein the specific information exists corresponding to each of the plurality of interfaces of the mobile terminal.

4. The network node according to claim 1, wherein the specific information contains information allowing the connection judgment means to make the judgment based on the specific information only and without making an inquiry to other network nodes.

5. The network node according to claim 3, wherein the specific information contains an interface identifier of the mobile terminal.

6. The network node according to claim 3, wherein the specific information contains a binding identifier used when a location of the mobile terminal is updated.

7. The network node according to claim 3, wherein the specific information contains a sequence number used when a location of the mobile terminal is updated.

8. The network node according to claim 1, wherein the specific information contains identification information of a network node with which the mobile terminal connected before the handover.

9. The network node according to claim 8, comprising information request means that requests information required for the judgment by the connection judgment means from the network node with which the mobile terminal connected before the handover, specified by the identification information.

10. The network node according to claim 1 adapted so that, when the mobile terminal makes a connection, the specific information is transmitted with a layer 2 message or a layer 3 message.

11. The network node according to claim 1, wherein the specific information contains checksum to detect tampering of the specific information.

12. The network node according to claim 1, wherein the specific information contains information indicating an expiration time.

13. The network node according to claim 12, comprising information update/notification means that updates the specific information with the expiration time being expired or the specific information with the expiration time being about to expire, and notifies the mobile terminal of the updated specific information for storage.

14. The network node according to claim 1, comprising inter-domain connection change judgment means that judges, based on the specific information, whether or not the mobile terminal moves between local mobility domains that are managed by different operators and have a roaming agreement.

15. The network node according to claim 14, comprising access authentication means that, when the inter-domain connection change judgment means judges that the mobile terminal moves between local mobility domains, performs access authentication by referring to information kept in a local mobility domain with which the mobile terminal connected before movement.

16. A mobile terminal that is connectable with a network system that provides a network based local mobility management service, comprising:
a plurality of wireless communication interfaces that are connectable with a network node functioning as a gateway of the network system;
information management means that, when connecting with the gateway, receives specific information corresponding to a connection by the mobile terminal from the gateway, and stores the specific information; and
information notification means that, when connecting with a new gateway, notifies the new gateway of the specific information stored in the information management means, thus allowing the new gateway to judge whether the connection made by the mobile terminal is generated due to a handover with a connection point being changed at any interface or due to a new connection using another interface.

17. The mobile terminal according to claim 16, wherein the specific information contains information allowing the network node to make the judgment based on the specific information only and without making an inquiry to other network nodes.

18. The mobile terminal according to claim 16 adapted so that, when connecting with the network node, the specific information is transmitted with a layer 2 message or a layer 3 message.

19. The mobile terminal according to claim 16, wherein the specific information contains information indicating an expiration time.

20. The mobile terminal according to claim 19, comprising information deletion means that deletes the specific information with the expiration time being expired from the specific information stored in the information management means.

21. The mobile terminal according to claim 19, comprising update request means that requests the network node to update the specific information with the expiration time being expired or the specific information with the expiration time being about to expire.

22. The mobile terminal according to claim 16, wherein the mobile terminal moves between local mobility domains that are managed by different operators and have a roaming agreement.
